# EUROPÄISCHE PATENTSCHRIFT

(11) **EP 3 243 056 B1**
(45) Veröffentlichungstag und Bekanntmachung des Hinweises auf die Patenterteilung: **02.01.2019**
(21) Anmeldenummer: 16700004.1
(22) Anmeldetag: 04.01.2016
(51) Int. Cl.: G01L 23/22

(54) **SCHWINGUNGSAUFNEHMER ZUM AUFNEHMEN VON SCHWINGUNGEN EINES SCHWINGUNGEN VERURSACHENDEN BAUTEILS**
VIBRATION PICKUP FOR PICKING UP VIBRATIONS OF A COMPONENT CAUSING VIBRATIONS
CAPTEUR DE VIBRATION POUR DÉTECTER DES VIBRATIONS D'UN COMPOSANT GÉNÉRANT DES VIBRATIONS

(30) Priorität: 09.01.2015 DE 102015200216
(43) Veröffentlichungstag der Anmeldung: 15.11.2017
(73) Patentinhaber: Robert Bosch GmbH, 70442 Stuttgart (DE)
(72) Erfinder: RADY, Dirk, 99084 Erfurt (DE); GLATZ, Alfred, 87527 Sonthofen (DE); WENZEL, Sebastian-Paul, 99817 Eisenach (DE); GUMPINGER, Rainer, 87549 Rettenberg Altach (DE)
(86) Internationale Anmeldenummer: PCT/EP2016/050004
(87) Internationale Veröffentlichungsnummer: WO 2016/110457

(56) Entgegenhaltungen:
- EP-A2- 0 129 354
- DE-A1- 3 918 780
- US-A- 5 852 234
- US-B1- 6 776 026

## Beschreibung

### Stand der Technik

Aus dem Stand der Technik sind zahlreiche Schwingungsaufnehmer für verschiedene Zwecke bekannt. Ein Zweck, auf den die vorliegende Erfindung jedoch nicht beschränkt ist, ist der Einsatz eines Schwingungsaufnehmers als Klopfsensor für die Überwachung der Funktion eines Verbrennungsmotors in einem Kraftfahrzeug.

Die DE 10 2007 024 202 A1 und die DE 10 2011 004 146 A1 beschreiben jeweils einen Klopfsensor mit einer Druckhülse, die mittels einer Anlagefläche mit einem Schwingungen verursachenden Bauteil wirkverbindbar ist, einem Sensorelement und einer seismischen Masse, die die Druckhülse zumindest abschnittsweise umgreifen, und einer Federeinrichtung, welche das Sensorelement und die seismische Masse unter einer in einer axialen Richtung der Druckhülse wirkenden Vorspannung hält. Zum Anbringen des Klopfsensors an dem Bauteil wird eine Schraube durch die Druckhülse gesteckt und mit dem Bauteil verschraubt.

Trotz der zahlreichen Vorteile der aus dem Stand der Technik bekannten Schwingungsaufnehmer beinhalten diese noch Verbesserungspotenzial. So bestehen die bekannten Schwingungsaufnehmer aus vielen einzelnen Bauteilen. Die Herstellkosten sind maßgeblich durch die Kosten dieser Bauteile sowie durch deren Größe bestimmt.

Weiterer relevanter Stand der Technik ist aus US 5.852.234, US 6.776.026 B1 und DE 10 2009 043 267 A1 bekannt.

### Offenbarung der Erfindung

Es wird daher ein Schwingungsaufnehmer vorgeschlagen, welcher die Nachteile bekannter Schwingungsaufnehmer zumindest weitgehend vermeidet und der durch Entfall verschiedener Bauteile kostengünstiger und kleiner herstellbar ist.

Der erfindungsgemäße Schwingungsaufnehmer zum Aufnehmen von Schwingungen eines Schwingungen verursachenden Bauteils ist in Anspruch 1 offenbart.

Das Sensorelement kann an dem Befestigungselement verdrehgesichert angebracht sein. Das Sensorelement ist an dem Befestigungselement mittels einer Kontermutter oder Verstemmung befestigt. Das Befestigungselement ist hierbei eine Schraube. Die Schraube weist einen Flansch auf.

Das Sensorelement ist zwischen der Kontermutter oder Verstemmung und dem Flansch angeordnet. Das Sensorelement kann einen Durchmesser aufweisen, wobei der Flansch einen Durchmesser aufweist, wobei der Durchmesser des Flansches im Wesentlichen gleich groß wie der Durchmesser des Sensorelements ist. Das Gehäuse kann eine bauteilzugewandte Stirnseite und eine bauteilabgewandte Stirnseite aufweisen, wobei die Kontermutter oder Verstemmung an der bauteilzugewandten Stirnseite angeordnet ist. Das Sensorelement kann gegen die Kontermutter oder Verstemmung vorgespannt sein. Die Schraube kann ein metrisches Gewinde der Größe M6 aufweisen.

Unter einer unmittelbaren Anbringung des Sensorelements an dem Befestigungselement ist im Rahmen der vorliegenden Erfindung eine Anbringung des Sensorelements zu verstehen, bei der sich in der Regel kein weiteres Bauteil zwischen dem Sensorelement und dem Befestigungselement befindet. In Ausnahmefällen kann, sofern erforderlich, ein elektrisch isolierendes Bauteil zwischen dem Sensorelement und dem Befestigungselement angeordnet sein. Entsprechend entfällt erfindungsgemäß die von herkömmlichen Schwingungsaufnehmern vorgesehene Druckhülse, auf der unter anderem das Sensorelement angebracht ist und die von dem Befestigungselement durchdrungen wird.

Unter einem metrischen Gewinde ist im Rahmen der vorliegenden Erfindung ein metrisches ISO-Gewinde zu verstehen. Das metrische ISO-Gewinde ist ein weltweit standardisiertes Gewinde mit metrischen Abmessungen und 60° Flankenwinkel. Die entsprechenden Gewindegrößen sind in der ISO 1502 von 1996 erarbeitet. Eine entsprechende Normierung findet sich auch in der DIN 13, insbesondere der DIN 13-1.

Ein Grundgedanke der vorliegenden Erfindung ist die Befestigung von Bauteilen des Schwingungsaufnehmers auf einer Standardschraube und eine Befestigung mittels Kontermutter oder Verstemmung. Dadurch kann eine Standardschraube der Größe M6 als Ersatz der herkömmlichen Druckhülse als zentrales Trägerelement verwendet werden. Dies erlaubt ein kompakteres Design.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in der Figur schematisch dargestellt sind.

Es zeigt:

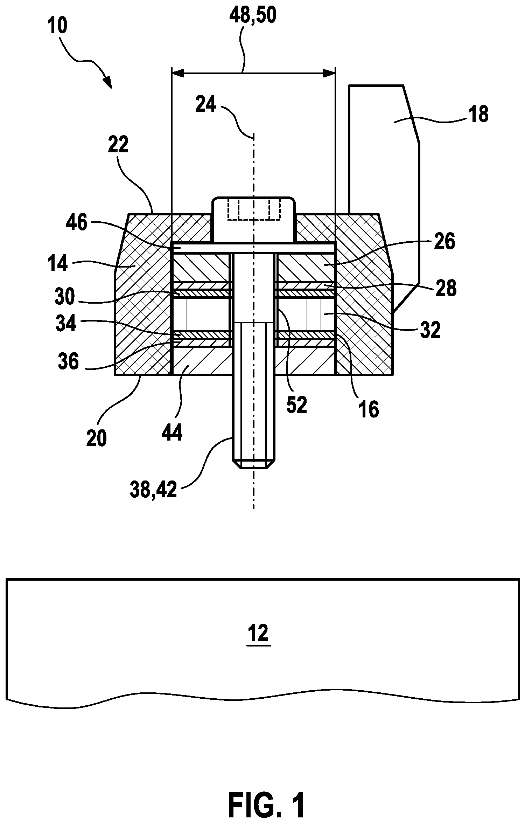

- Figur 1: einen Schwingungsaufnehmer gemäß einer Ausführungsform der vorliegenden Erfindung.

### Ausführungsformen der Erfindung

Figur 1 zeigt einen Schwingungsaufnehmer 10 zum Aufnehmen von Schwingungen eines Schwingungen verursachenden Bauteils 12 gemäß einer Ausführungsform der vorliegenden Erfindung. Das Schwingungen verursachende Bauteil 12 kann beispielsweise ein Motorblock sein. Entsprechend kann der Schwingungsaufnehmer 10 als Klopfsensor ausgebildet sein. Der Schwingungsaufnehmer 10 weist ein Gehäuse 14, insbesondere ein spritzgegossenes Kunststoffgehäuse 14 auf. Das Gehäuse 14 weist einen Innenraum 16 auf. Das Gehäuse 14 weist weiterhin einen vorzugsweise integrierten Anschlussabschnitt 18 mit einem eingespritzten Anschlusskabel auf. Alternativ kann der Anschlussabschnitt 18 als Stecker oder als Steckverbindung zum vorzugsweise wieder lösbaren Anschluss des Anschlusskabels ausgebildet sein. Elektrische Leiter bzw. Litzen des Anschlusskabels sind im Inneren des Anschlussabschnitts 18 angeordnet.

Das Gehäuse 14 weist eine bauteilzugewandte Stirnseite 20 und eine bauteilabgewandte Stirnseite 22 auf. Der Innenraum 16 des Gehäuses 14 kann zylindrisch um eine Zylinderachse 24 ausgebildet sein. In dem Fall, in dem das Gehäuse 14 ein spritzgegossenes Kunststoffgehäuse 14 ist, ist der Innenraum 16 ebenfalls mit Kunststoff gefüllt, so dass dieser kein Hohlraum ist, sondern verfüllt ist bzw. entfällt. In diesem Fall ist der Ausdruck Innenraum im Sinne von Innenbereich des Gehäuses 14 zu verstehen. Bei einer bevorzugten Ausführungsform sind in dem Innenraum 16 in der nachstehend genannten Reihenfolge von der bauteilabgewandten Stirnseite 22 in Richtung zu der bauteilzugewandten Stirnseite 20 eine seismische Masse 26, eine obere Isolierscheibe 28, eine obere Kontaktscheibe 30, ein Sensorelement 32, eine untere Kontaktscheibe 34 und eine untere Isolierscheibe 36 angeordnet. Bei einer nicht näher gezeigten alternativen Ausführungsform kann die seismische Masse 26 anstelle der zuvor angegebenen Position unterhalb der unteren Isolierscheibe 36 angeordnet sein. Das Sensorelement 32 ist beispielsweise ein piezoelektrisches Sensorelement. Die elektrischen Leiter bzw. Litzen des Anschlusskabels sind jeweils mit den Kontaktscheiben 30, 34 verbunden und übertragen eine elektrische Spannung, welche bei einer Druckbeaufschlagung des Sensorelements 32 erzeugt wird. Mittels einer Auswertung der elektrischen Spannung mit einer nicht näher dargestellten Auswerteeinrichtung kann beispielsweise eine Schwingungsbelastung des Bauteils 12 ermittelt werden. Wie nachstehend ausführlicher beschrieben wird, ist das Gehäuse 14 so ausgebildet, dass es mittels eines Befestigungselements 38 mit dem Bauteil 12 verbindbar ist. Das Befestigungselement 38 erstreckt sich durch den Innenraum 16 hindurch und ist zumindest teilweise von dem Sensorelement 32 umgeben. Das Befestigungselement 38 ist zusätzlich von der oberen Isolierscheibe 28, der oberen Kontaktscheibe 30, der unteren Kontaktscheibe 34, der unteren Isolierscheibe 36 und der seismischen Masse 26 umgeben. Beispielsweise definiert das Befestigungselement 38 eine Längsachse 38 und die obere Isolierscheibe 28, die obere Kontaktscheibe 30, das Sensorelement 32, die untere Kontaktscheibe 34, die untere Isolierscheibe 36 und die seismische Masse 26 sind koaxial zu der Längsachse 40 angeordnet.

Erfindungsgemäß ist das Sensorelement 32 unmittelbar an dem Befestigungselement 38 angebracht. Bei dem gezeigten Ausführungsbeispiel ist das Befestigungselement 38 eine Schraube 42. Dabei ist das Sensorelement 32 an dem Befestigungselement 38 verdrehgesichert angebracht. So ist das Sensorelement 32 an dem Befestigungselement 38 mittels einer Kontermutter oder Verstemmung 44 befestigt. Die Kontermutter oder Verstemmung 44 ist an der bauteilzugewandten Stirnseite 20 angeordnet. Bei der oben erwähnten, nicht näher gezeigten alternativen Ausführungsform kann sich die seismische Masse 26 zwischen der unteren Isolierscheibe 36 und der Verstemmung 44 befinden.

Wie in Figur 1 weiter gezeigt, weist die Schraube 42 einen Flansch 46 auf. Das Sensorelement 32 ist dabei zwischen der Kontermutter oder Verstemmung 44 und dem Flansch 46 angeordnet. Zusätzlich sind die obere Isolierscheibe 28, die obere Kontaktscheibe 30, die untere Kontaktscheibe 34, die untere Isolierscheibe 36 und die seismische Masse 26 oberen Isolierscheibe 28, der oberen Kontaktscheibe 30, der unteren Kontaktscheibe 34, der unteren Isolierscheibe 36 und der seismischen Masse 26 zwischen der Kontermutter oder Verstemmung 44 und dem Flansch 46 angeordnet. Der Flansch 46 weist einen Durchmesser 48 auf. Das Sensorelement 32 weist ebenfalls einen Durchmesser 50 auf. Der Durchmesser 48 des Flansches 46 ist im Wesentlichen gleich groß wie der Durchmesser 50 des Sensorelements 32. Entsprechend sorgt der Flansch 46 für ein flächiges Andrücken an das Sensorelement 32, das wiederum an die Kontermutter oder Verstemmung 44 bei einem Festziehen der Schraube 42 angedrückt wird. Das Sensorelement 32 kann somit gegen die Kontermutter oder Verstemmung 44 vorgespannt sein. Durch ein Vorsehen einer optionalen Scheibenfeder zwischen dem Flansch 46 und dem Sensorelement 32 kann das Sensorelement 32 elastisch gegen die Kontermutter oder Verstemmung 44 vorgespannt werden. Die Schraube 42 weist dabei insbesondere ein metrisches Gewinde der Größe M6 auf. Entsprechend wird im Vergleich zu herkömmlichen Schwingungsaufnehmern eine kleinere Schraubengröße verwendet, da bei herkömmlichen Schwingungsaufnehmern eine Schraube der Größe M8 zum Befestigen des Schwingungsaufnehmers an dem Bauteil 12 verwendet wird, die durch die druckhülse hindurchgesteckt wird. Dadurch kann der gesamte Aufbau des Schwingungsaufnehmers 10 im Vergleich zu herkömmlichen Schwingungsaufnehmern verkleinert sein. Insbesondere kann das Sensorelement 32 kleiner ausgeführt sein. So weist beispielsweise ein Durchgangsloch 52 des Sensorelements 32, durch das sich die Schraube 42 erstreckt, einen kleineren Innendurchmesser als bei herkömmlichen Sensorelementen auf, die auf eine Druckhülse aufgeschoben werden.

## Patentansprüche

1. Schwingungsaufnehmer (10) zum Aufnehmen von Schwingungen eines Schwingungen verursachenden Bauteils (12), insbesondere ein Klopfsensor, umfassend ein Gehäuse (14) mit einem Innenraum (16) und ein Sensorelement (32), wobei das Sensorelement (32) in dem Innenraum (16) des Gehäuses (14) angeordnet ist, wobei das Gehäuse (14) so ausgebildet ist, dass es mittels eines Befestigungselements (38) mit dem Bauteil (12) verbindbar ist, wobei sich das Befestigungselement (38) durch den Innenraum (16) hindurch erstreckt und zumindest teilweise von dem Sensorelement (32) umgeben ist,
**dadurch gekennzeichnet, dass**
das Befestigungselement (38) eine Schraube (42) ist und die Schraube (42) einen Flansch (46) aufweist, und das Sensorelement derart an dem Befestigungselement (38) angebracht ist, dass sich entweder kein weiteres Bauteil zwischen dem Sensorelement (32) und dem Befestigungsmittel (38) oder ein elektrisch isolierendes Bauteil zwischen dem Sensorelement (32) und dem Befestigungselement (38) befindet, indem das Sensorelement (32) an dem Befestigungselement (38) mittels einer Kontermutter oder Verstemmung (44) befestigt ist und das Sensorelement (32) zwischen der Kontermutter oder Verstemmung (44) und dem Flansch (46) angeordnet ist.

2. Schwingungsaufnehmer (10) nach dem vorhergehenden Anspruch, wobei das Sensorelement (32) an dem Befestigungselement (38) verdrehgesichert angebracht ist.

3. Schwingungsaufnehmer (10) nach Anspruch 1, wobei das Sensorelement (32) einen Durchmesser (50) aufweist, wobei der Flansch (46) einen Durchmesser (48) aufweist, wobei der Durchmesser (48) des Flansches (46) gleich groß wie der Durchmesser (48) des Sensorelements (32) ist.

4. Schwingungsaufnehmer (10) nach einem der vorstehenden Ansprüche, wobei das Gehäuse (14) eine bauteilzugewandte Stirnseite (20) und eine bauteilabgewandte Stirnseite (22) aufweist, wobei die Kontermutter oder Verstemmung (44) an der bauteilzugewandten Stirnseite (20) angeordnet ist.

5. Schwingungsaufnehmer (10) nach einem der vorstehenden Ansprüche, wobei das Sensorelement (32) gegen die Kontermutter oder Verstemmung (44) vorgespannt ist.

6. Schwingungsaufnehmer (10) nach einem der vorstehenden Ansprüche, wobei die Schraube (42) ein metrisches Gewinde der Größe M6 aufweist.

## Claims

1. Vibration pickup (10) for picking up vibrations of a component (12) causing vibrations, in particular a knock sensor, comprising a housing (14) having an interior (16) and a sensor element (32), the sensor element (32) being arranged in the interior (16) of the housing (14), the housing (14) being formed such that it can be connected to the component (12) by means of a fixing element (38), the fixing element (38) extending through the interior (16) and being at least partly surrounded by the sensor element (32),
**characterized in that**
the fixing element (38) is a screw (42) and the screw (42) has a flange (46), and the sensor element is attached to the fixing element (38) in such a way that either there is no further component between the sensor element (32) and the fixing means (38) or there is an electrically insulating component between the sensor element (32) and the fixing element (38), by the sensor element (32) being fixed to the fixing element (38) by means of a union nut or by caulking (44), and the sensor element (32) being arranged between the union nut or caulking (44) and the flange (46) .

2. Vibration pickup (10) according to the preceding claim, wherein the sensor element (32) is attached to the fixing element (38) so as to be secured against rotation.

3. Vibration pickup (10) according to Claim 1, wherein the sensor element (32) has a diameter (50), wherein the flange (46) has a diameter (48), wherein the diameter (48) of the flange (46) is as large as the diameter (48) of the sensor element (32) .

4. Vibration pickup (10) according to one of the preceding claims, wherein the housing (14) has an end face (20) facing the component and an end face (22) facing away from the component, wherein the union nut or caulking (44) is arranged on the end face (20) facing the component.

5. Vibration pickup (10) according to one of the preceding claims, wherein the sensor element (32) is preloaded against the union nut or caulking (44) .

6. Vibration pickup (10) according to one of the preceding claims, wherein the screw (42) has an M6 metric thread.

## Revendications

1. Capteur de vibrations (10) destiné à détecter des vibrations d'un composant (12) générant des vibrations, en particulier un capteur de cliquetis, comprenant un boîtier (14) pourvu d'un espace intérieur (16) et un élément de détection (32), dans lequel l'élément de détection (32) est disposé dans l'espace intérieur (16) du boîtier (14), dans lequel le boîtier (14) est conçu de manière à pouvoir être relié au composant (12) au moyen d'un élément de fixation (38), dans lequel l'élément de fixation (38) s'étend à travers l'espace intérieur (16) et est entouré au moins en partie par l'élément de détection (32),
**caractérisé en ce que** l'élément de fixation (38) est une vis (42), **en ce que** la vis (42) présente une bride (46), et **en ce que** l'élément de détection est monté sur l'élément de fixation (38) de telle manière que soit aucun autre composant ne se trouve entre l'élément de détection (32) et l'élément de fixation (38), soit un composant électriquement isolant se trouve entre l'élément de détection (32) et l'élément de fixation (38), en fixant l'élément de détection (32) à l'élément de fixation (38) au moyen d'un contre-écrou ou d'un calfeutrage (44) et en disposant l'élément de détection (32) entre le contre-écrou ou le calfeutrage (44) et la bride (46).

2. Capteur de vibrations (10) selon la revendication précédente, dans lequel l'élément de détection (32) est fixé à l'élément de fixation (38) de manière à être immobilisé en rotation.

3. Capteur de vibrations (10) selon la revendication 1, dans lequel l'élément de détection (32) présente un diamètre (50), dans lequel la bride (46) présente un diamètre (48), dans lequel le diamètre (48) de la bride (46) est égal au diamètre (48) de l'élément de détection (32) .

4. Capteur de vibrations (10) selon l'une des revendications précédentes, dans lequel le boîtier (14) présente une face frontale (20) tournée vers le composant et une face frontale (22) tournée à l'opposé du composant, dans lequel le contre-écrou ou le calfeutrage (44) est disposé sur la face frontale (20) tournée vers le composant.

5. Capteur de vibrations (10) selon l'une des revendications précédentes, dans lequel l'élément de détection (32) est précontraint contre le contre-écrou ou le calfeutrage (44).

6. Capteur de vibrations (10) selon l'une des revendications précédentes, dans lequel la vis (42) présente un filetage métrique de taille M6.
